# EUROPEAN PATENT SPECIFICATION

(11) **EP 0 440 241 B1**
(45) Date of publication and mention of the grant of the patent: **01.09.1999**
(21) Application number: 91101310.0
(22) Date of filing: 31.01.1991
(51) Int. Cl.: G03C 3/00, G03B 17/26

(54) **A photographic film cassette**
Photographische Filmkassette
Cassette à film photographique

(30) Priority: 02.02.1990 JP 2421690; 05.07.1990 JP 17797290
(43) Date of publication of application: 07.08.1991
(73) Proprietor: FUJI PHOTO FILM CO., LTD., Kanagawa-ken (JP)
(72) Inventor: Mizuno, Kazunori, c/o Fuji Photo Film Co., Ltd., Minami Ashigara-shi, Kanagawa-ken (JP)
(74) Representative: Grünecker, Kinkeldey, Stockmair & Schwanhäusser Anwaltssozietät

(56) References cited:
- EP-A- 0 064 650
- GB-A- 2 072 622
- US-A- 4 634 071
- US-A- 4 832 275
- US-A- 4 880 179

## Description

The present invention relates a photographic film cassette of the type as defined in the preamble of claim 1, more particularly to a construction of a film passageway through which film is advanced from the film cassette.

A photographic film cassette for containing a photographic filmstrip (hereinafter referred to as "film") of 135-type (i.e. 35 mm in width) is the most prevalent of various film cassettes. This film cassette consists of a light-tight cylindrical cassette body having a film passageway, a spool rotatably contained in the cassette body, and the film coiled around the spool.

Light trapping fabric (generally called "plush" in the field of photography) is attached to the inner surfaces of the film passageway for trapping light entering the cassette body through a film passage mouth. There are various types of this light trapping fabric: fabric constituted of woven fabric and pile threads woven therein as described in Japanese Utility Model Publication 37-21388; fabric constituted of knitted fabric and pile threads woven therein as described in Japanese Utility Model Publication 61-34526; pile threads planted on the film passageway as disclosed in Japanese Utility Model Publication 37-4453, and Japanese Patent Laid-Open Publications 53-105222 and 57-190948; and fabric constituted of non-woven fabric as disclosed in Japanese Utility Model Laid-Open Publication 51-127737.

In the film cassette most generally in use, a film leader of the film coiled in a roll is in a state protruded from the film passage mouth. However, a film cassette with the whole of the roll film contained in the cassette body up to a leading end of the film has been recently proposed, in which film cassette a rotation of the spool causes the film to advance to the outside of the cassette body toward a film take-up chamber in a camera so as to wind the film on a take-up spool in the film take-up chamber, as disclosed in US-A-4,832,275, US-A-4 880 179, and US-A-4,834,306.

US-A-4 832 275 and US-A-4 880 179 describe a cassette body comprising two halfs which are mated along respective grooved and stepped edges, which, however, can not solve the problem of light trapping within the film passageway.

There is also a film cassette having a cassette body formed out of plastics, which has been used recently. The opposite lateral sides of a film passageway in this cassette body are defined by lateral walls, between which light trapping fabric is attached to both inner surfaces of the film passageway. If the precision in attachment of the light trapping fabric is low as to the position, gaps might appear between the lateral ends of the light trapping fabric and the lateral walls. There is a problem is that fogging might be generated on photographic film when external light is incident on the inside of the cassette body through the gaps. A film cassette has been proposed for solving this problem as described in Japanese Patent Laid-Open Publication 57-190948, in which extra fabric for trapping light is attached to both lateral walls of the film passageway.

However, the light trapping fabric is attached to the film passageway so as to press the film between both pieces thereof in a self-advance film cassette described above, the light trapping fabric is considerably resistant to advancing the film. There are problems in this light trapping fabric which might bend the film in the cassette body, stop the film from advancing, and damage surfaces of the film.

The pile threads of the above-described light trapping fabric occupy a larger space at their tips but a smaller space at their bottoms, because they are bunched at their bottoms. Light is trapped reliably at the middle between the upper and lower surfaces of the film passageway, but incompletely in the vicinity of the upper and lower surfaces. External light entering the inner surfaces of the film passageway might be incident on the outermost turn of the film without being trapped by the light trapping fabric. If the form of the film passageway is determined to have a large value of an angle between the external light incident on the film and the tangent of the outermost turn of the film, there is a problem in that the light incident on the coiled film causes fogging on a number of turns of the coiled film. A film cassette as disclosed in Japanese Patent Laid-Open Publication 57-190948 has a problem of too high cost, because two different types of light trapping fabric are necessary.

It is therefore an object of the present invention to provide a photographic film cassette capable of guiding film smoothly to the film passage mouth for a film advance without resistance of light trapping fabric.

It is another object of the present invention to provide a photographic film cassette capable of shielding the film reliably from light in passage through gaps involved in the light trapping fabric at a low cost.

In order to achieve the above and other objects and advantages of this invention, a photographic film cassette is herewith proposed which comprises the features of claim 1.

The steps are formed on lateral walls of the film passageway facing on lateral edges of the film so as to widen the film passageway in the vicinity of the film passage mouth in order to shield light incident on gaps between the lateral walls and the fabrics.

In the film cassette in accordance to the present invention, the film can be guided smoothly for a film advance without resistance of light trapping fabric. The film can also be shielded reliably from light in passage through gaps involved in the light trapping fabric at a low cost without high friction between the film and the light trapping fabric during the film advance.

According to another preferred embodiment, a ridge extended portion extends from a ridge formed on an inner surface of the cassette body in order to prevent the film from loosening toward the film passage mouth along the upper surface.

The film cassette comprises the inclined surfaces which have an inclination such that the width of the said passageway increases in the direction toward the inside of the film cassette until the steps formed on both inner surfaces.

The above objects and advantages of the present invention will become more apparent from the following detailed description of a preferred embodiment thereof when read in connection with the accompanying drawings, in which:
Fig. 1 is an exploded perspective view illustrating the general construction of a photographic film cassette;
Fig. 2 is a section view illustrating the inside of the film cassette illustrated in Fig. 1;
Fig. 3 is a front view illustrating a portion of the film cassette illustrated in Fig. 1;
Fig. 4 is an explanatory view illustrating the operation of the film cassette illustrated in Fig. 1;
Fig. 5 is a section view illustrating a state in which two flanges clamp the film roll;
Fig. 6 is a section view illustrating an aspect of the film cassette according to the present invention;
Fig. 7A is a perspective view, partially cutaway, illustrating an additional aspect of a film cassette ;
Fig. 7B is an enlarged perspective view illustrating an important portion of the film cassette illustrated in Fig. 7A;
Fig. 8 is a front view illustrating the film cassette illustrated in Fig. 7A; and
Fig. 9 is a perspective view illustrating a film cassette in combination of the embodiments illustrated in Figs. 7A and 8.

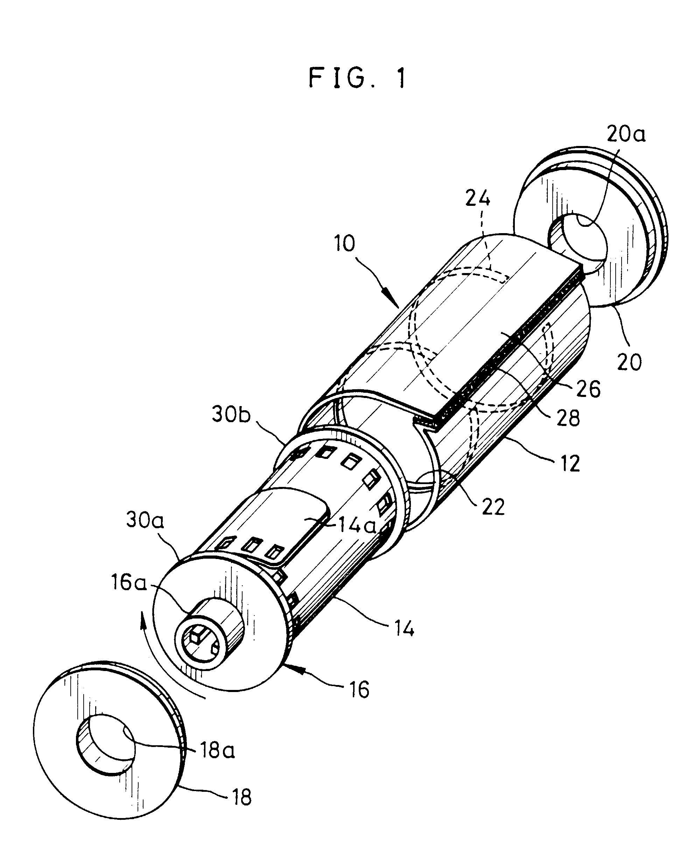

Fig. 1 illustrates a photographic film cassette 10 consisting of a cassette shell 12, a spool 16 with the photographic film 14 coiled thereabout, and cassette caps 18 and 20. The cassette shell 12 for containing the film 14 e.g. negative film coiled around the spool 16 has two annular ridges 22 and 24 formed on its inner surface in order to reduce friction between the film 14 and the inner surface of the cassette shell 12.

Light trapping fabric 28 is attached on the upper and lower surface of a film passageway 26 in the cassette shell 12, in order to prevent light from entering the cassette shell 12. The light trapping fabric 28 is constituted of black-dyed velvet having rayon ground fabric with warp thread of 83 dtex (75 deniers) and weft thread of 167 dtex (150 deniers), and nylon pile threads of 83 dtex (75 deniers). Other material may also be used for the ground fabric and the pile threads: synthetic fibers such as nylon, acrylic fibers, polyester, vinylon, vinyl chloride, vinylidene copolymer, polypropylene and polyethylene polycarbonate; and natural or regenerated fibers such as rayon, cupro-ammonium rayon, acetate, cotton and silk.

There are a number of methods for attaching the light trapping fabric 28 on the cassette shell 12: a method consisting of applying adhesive agent to the position for attachment on the cassette shell 12, and then adhering the light trapping fabric 28 cut in a predetermined size; and a method consisting of applying sealer to the light trapping fabric 28, then applying hot-melt adhesive agent thereto, cutting it in a predetermined size, placing it on the position for attachment, attaching it in fusion and reactivation by means of fever, ultrasonic wave or high frequency. The light trapping fabric 28 may also be attached with sealer adhesive agent used for both the sealer and the adhesive agent, or double-coated adhesive tape, or by spot welding in the case of a plastic cassette shell.

The spool 16 has flanges 30a and 30b for supporting the film between both ends of the spool 16, and is to be rotated for advancing the leading end 14a of the film 14 to the outside of the cassette shell 12. Bearing openings 18a and 20a are formed each in the cassette caps 18 and 20 for receiving and supporting a spool shaft 16a.

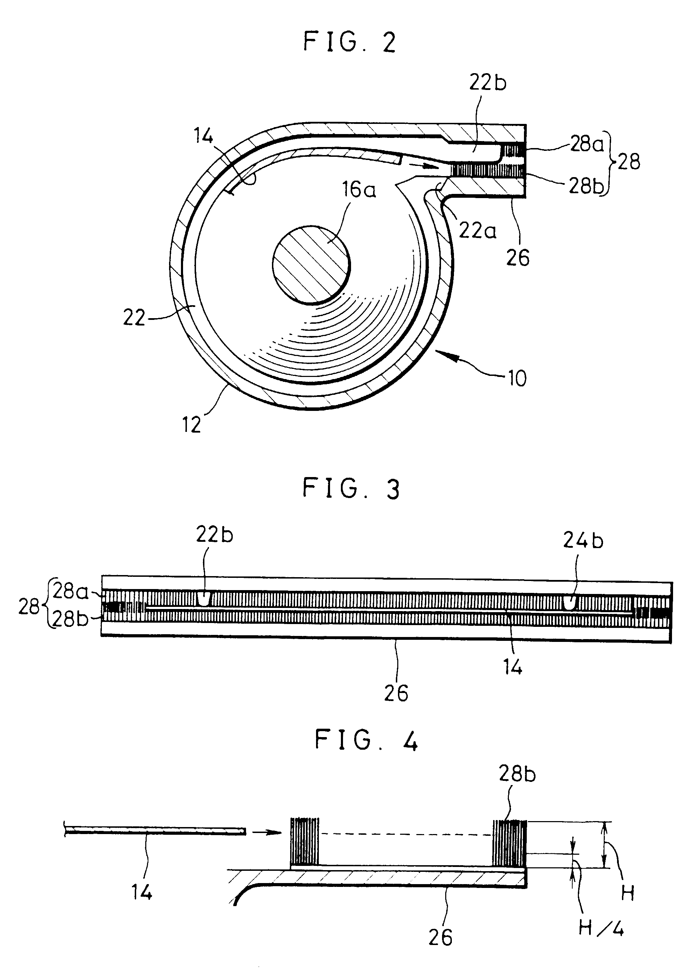

In Figs. 2 and 3, illustrating the inside of the film cassette 10 and the outside of the film passageway 26 of the cassette shell 12 observed from the film passage mouth, the light trapping fabric 28 consists of upper and lower fabric pieces 28a and 28b attached each to the upper and lower surfaces of the film passageway 26. The tips of the pile threads of each of the fabric pieces 28a and 28b actually project among the pile threads of the opposite fabric piece, although the fabric pieces 28a and 28b are illustrated separate at the center of the film passageway 26 for the purpose of understanding. The ridge 22 is extended to locate a lower end 22a of the ridge 22 at the innermost position of the film passageway 26, and an upper end 22b of the ridge 22 at the middle of the film passageway 26 outside its innermost position. The upper ridge end 22b is formed to be in contact with the upper surface of the film 14 so as to guide the film 14 to the middle between the fabric pieces 28a and 28b at the time of advancing the film 14.

In order to advance the film 14 smoothly through the film passageway 26, it is preferable to determine the projecting degree of the upper ridge end 22b such that the film 14 advances against the lower fabric piece 28b at a position higher than the position of 1/4 as high as the length H of the pile threads with reference to the upper surface of the ground fabric of the lower fabric piece 28b as illustrated in Fig. 4. This is because the advance position higher than H/4 can reduce to a comparative extent the resistance received by the film 14 upon advancing against the light trapping fabric 28. The ridge 24 has the same construction as the ridge 22 described as above.

The operation of the embodiment thus constructed is now described. When the spool shaft 16a is rotated for initially advancing the film 14, the ridges 22 and 24 guide the leading end 14a to be close to the position of lapping the pile threads of the fabric pieces 28a and 28b. The film 14 is thus smoothly advanced through the light trapping fabric 28.

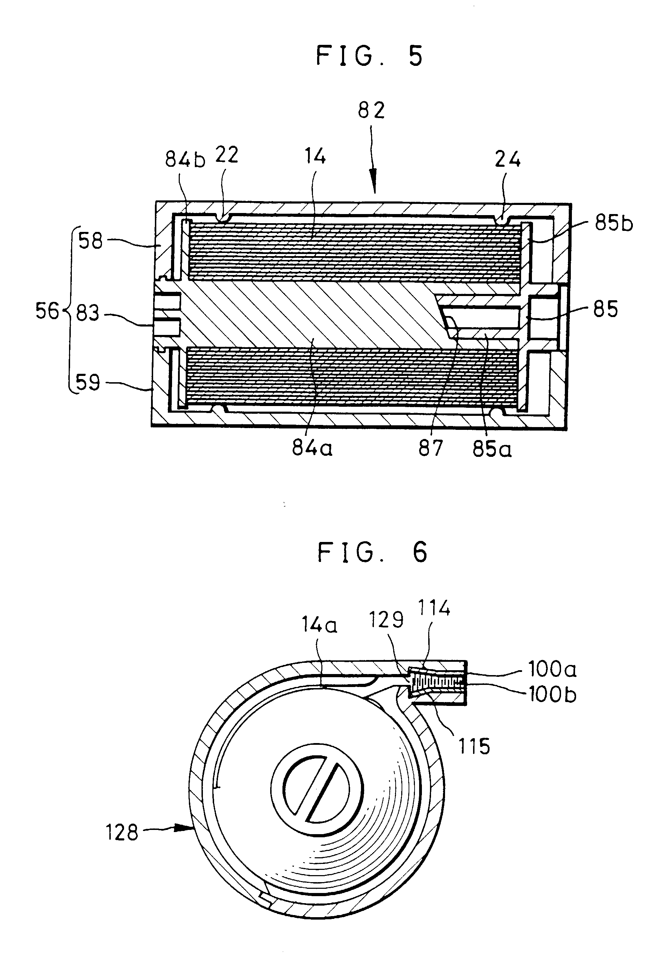

The film cassette illustrated in Figs. 1 to 4 is a 135 type having been widespread in use. Because the above-described light trapping fabric can pass the film smoothly therethrough with a reliable light-trapping function, it is much effective to apply it to a self-advancing film cassette for advancing a film leader through a film passageway by rotating the spool. The resistance of light trapping fabric must be as small as possible in a self-advancing film cassette before the film leader can be advanced from the film passageway. Fig. 5 illustrates an embodiment of a self-advancing film cassette with such light trapping fabric attached to a film passageway as is the main part of the present invention. Elements substantially similar in these drawings are designated by the same reference numerals.

A self-advancing film cassette 82 illustrated in Fig. 5 has the two annular ridges 22 and 24 formed in the inner surface of a cassette shell for receiving film wound in a roll in order to transmit rotation of a spool reliably to the film roll. The film cassette 55 consists of the cassette body 56 and the film 14 contained therein in a coiled state. The cassette body 56 includes two shell halves 58 and 59, and a spool 83 rotatably contained therein. The shell halves 58 and 59 are made from plastics and attached together containing the spool 83 with the film 14 coiled thereabout. The ridges 22 and 24 are formed integratedly with the shell halves 58 and 59 on the inner surface along the circumferential direction. The ridges 22 and 24 are in contact with the outermost turn of the film 14 to prevent the film roll from loosening.

The self-advancing film cassette 82 illustrated in Fig. 5 has flanges which clamp the film roll during a film advance, and are released from the film roll while winding the film 14. The spool 83 consists of two spool pieces 84 and 85. A shaft 84a of the spool piece 84 has a cylindrical recess formed on the tip, in which a shaft 85a of the spool piece 85 is slidably fitted. A ridge 86 is formed on the shaft 84a thereabout and rotatably fitted in a circular groove formed on a shaft bearing of the shell halves 58 and 59. The bottom of the cylindrical recess of the shaft 84a has an inclined surface 87. The tip of the shaft 85a of the spool piece 85 is also inclined to be fitted on the inclined surface 87. The spool pieces 84 and 85 are provided with flanges 84b and 85b each integrated therewith for clamping both opposite sides of the film roll while advancing the film 14.

When the spool piece 84 is rotated in the unwinding direction, the spool piece 85 is immediately slid to the spool piece 84 according to a cam mechanism (not shown) for linking the spool pieces 84 and 85. The film roll is clamped between both flanges 84b and 85b as is illustrated in Fig. 5. The spool pieces 84 and 85 are rotated together so as to rotate the film roll integratedly without loosening. The leading end 14a is reliably advanced outside the cassette body 56 through the film passageway 26. Upon rotating the spool piece 84 while rewinding the film 14, the cam mechanism slides the spool piece 85 outwardly to enlarge the distance between the flanges 84b and 85b. This distance becomes larger than the width of the film 14 so that the film 14 can be rewound on the shaft 84a.

The results of experiments are next described as to the above-described embodiments. The experiments were conducted on the torque applied to the spool shaft 16a upon entering the leading end 14a in the film passageway 26 while rotating the spool shaft 16a from a state with the leading end 14a of the film all wound in the cassette body 12. The applied torque was measured by a torquemeter to determine the resistance applied to the film 14.

The maximum torque applied to the spool shaft 16a was 135 g·cm in the embodiment illustrated in Fig. 2. Because it has been known from prior experiments that the film 14 can smoothly be advanced when the torque applied to the spool shaft 16a is below 200 g^{·}cm, the results of the above experiments show that the film 14 can be advanced smoothly from the film cassettes according to the present invention.

An experiment was conducted also on a film cassette in which the leading end 14a is to abut the pile threads of the lower fabric piece at a height smaller than H/4 with reference to the surface of the ground fabric of the lower fabric piece. In such a film cassette, however, the applied torque was more than 200 g^{·}cm. Sometimes the film was bent and failed to advance.

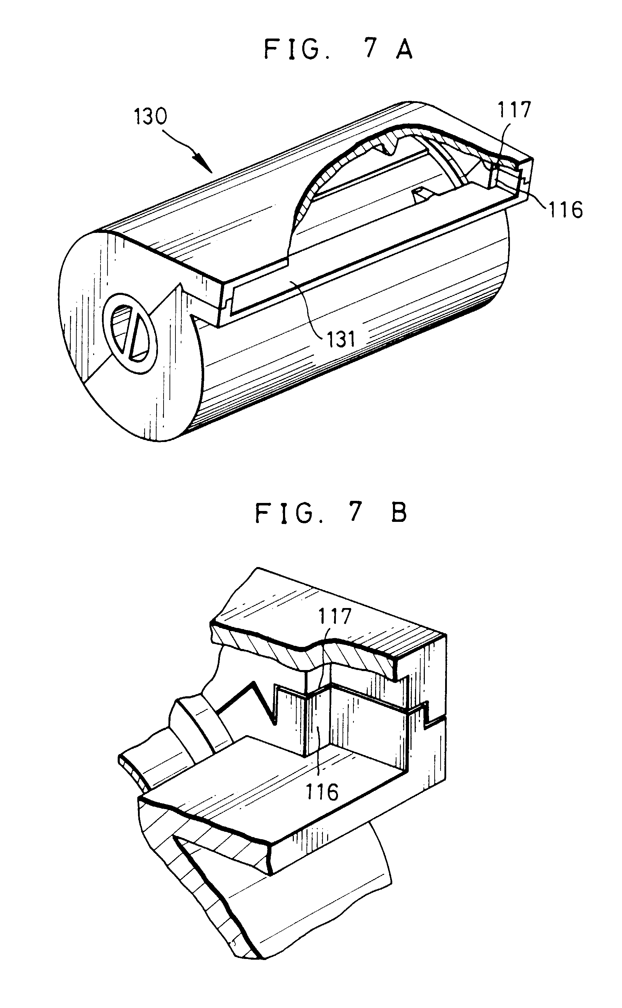

In Fig. 6 a film cassette 128 is illustrated, a film passageway 129 of the film cassette 128 is provided with inclined surfaces 114 and 115 as its upper and lower surfaces for attaching the light trapping fabric 100 thereto. The inclined surfaces 114 and 115 has such an inclination that the width of the film passageway 129 increases in the direction toward the inside of the film cassette 128 until the steps formed on both inner surfaces. Therefore, the leading end 14a can be smoothly entered through the ground fabric 100a in the film cassette 128, as well as the bottoms of the pile threads 100b are reliably shielded from light at the film passage mouth 97.

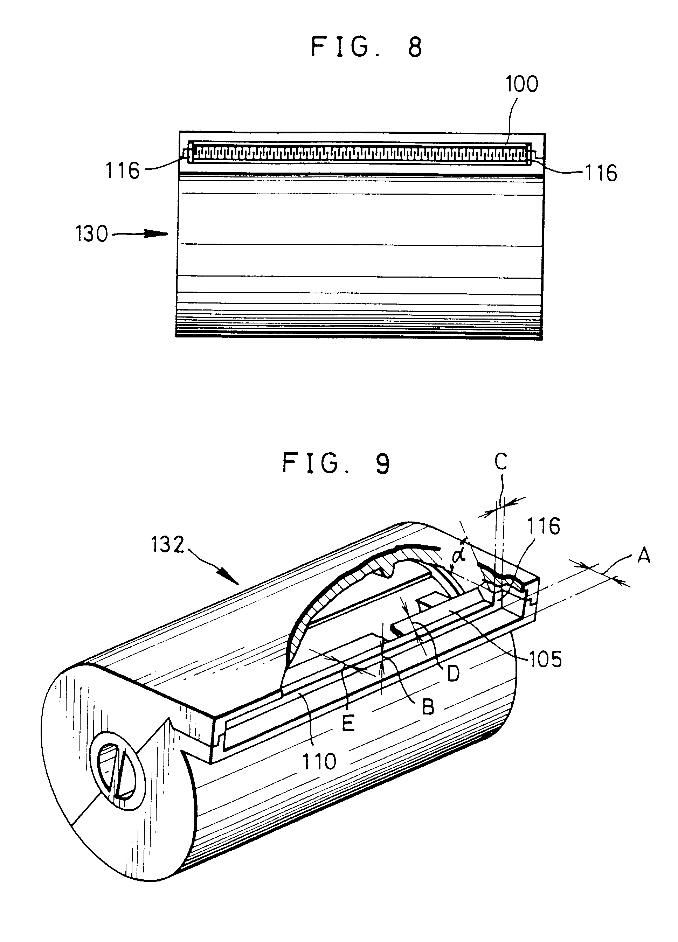

Figs. 7A and 8 illustrate a film cassette 130 according to an additional preferred embodiment, a film passageway 131 of the film cassette 130 has a step 116 formed on each of both lateral walls in order to enlarge the lateral width of the film passageway at the film passage mouth 97. A juncture 117 between shell halves 58 and 59 traverses the step 116. In order to prevent light from entering the film cassette 130 through the juncture 117, the juncture 117 to be engaged together has a construction of labyrinth constituted of lines forming angles. In the film cassette 130 thus constructed, the step 116 prevents the external light from entering the film cassette 130 through the gaps between the light trapping fabric 100 and both lateral walls of the film passageway 131 as is illustrated in Fig. 8. Instead of the juncture 117 as formed in Fig. 7A, the angularly formed juncture 117 to be engaged together may also be constructed such that a projection on the edge of the upper shell half 58 engages with a recess of the edge of the lower shell half 59 as is illustrated in Fig. 7B.

Experiments were carried out on the fogging of the film contained in the film cassettes as described with reference to Figs. 6 to 8. The film cassettes with Fuji Color Super HG 400 (merchandise name) contained therein were exposed to light of 100,000 lux for 3 minutes. The film was developed and then visually inspected whether to have fogging. No fogging was detected in the film from any of the film cassettes.

Fig. 9 illustrates a film cassette 132 in combination of the constructions of the above embodiments, the film passageway of the film cassette 132 has two steps 110 on the upper and lower surfaces, the two steps 116 on both lateral walls (see Fig. 7A), and a light shielding member 105 formed on the innermost position close to the roll of film in parallel with the spool. The juncture traversing the steps 116 has a labyrinthian construction of lines forming angles. The light shielding structure thus constructed is preferably designed to have: 5 mm for the width A of the fabric fitting portion outside the steps 110; 1 mm for the height B of the steps 110; 1 mm for the height C of the steps 116; 3 mm for the length D of the light shielding member 105; 1.5 mm for the interval E between the lower of the steps 110 and the bottom of the light shielding member 105; and 30 degrees for an angle α formed along the juncture to be engaged.

An experiment was carried out. The film cassette 132 with the Fuji Color Super HG 400 as referred to above contained therein was exposed to light of 100,000 lux for 3 minutes. The film was developed and then visually inspected whether to have fogging. No fogging was detected in the film from the film cassette 132.

Although the constructions for shielding the film from light have been described as applied in a film cassette for 35 mm roll film, these constructions may also be applied in other various plastic film cassettes such as a 110 cartridge and a film cassette without a mechanism for causing the film to be advanced by rotating the spool.

The construction of any of the embodiments according to the present invention not only is applied in a film cassette for being loaded in a camera, but also may be applied in a container for containing any photographic film in the form of a filmstrip, e.g. film for computerized typesetting, light-sensitive resin film, and microfilm.

Although the present invention has been fully described by way of the preferred embodiments thereof with reference to the accompanying drawings, various changes and modifications will be apparent to those having skill in this field. Therefore, unless otherwise these changes and modifications depart from the scope of the claims, they should be construed as included therein.

## Claims

1. A photographic film cassette (10,128,130,132) comprising:
a photographic film (14) coiled on a spool (83) contained in a cassette body (56), formed by two halves (58,59), in light-tight fashion, said film being advanced to the outside through a film passage mouth;
a film passageway (26,129,131) formed in said cassette bodv in order to pass said film through said film passage mouth, said film passageway having respective inner upper and lower surfaces;
first and second fabric members (28a,28b,100a) having pile threads (100b), attached to said film passageway for trapping light;
said upper and lower surfaces of said film passageway each having a flat surface portion, such that a width of said film passageway is constant, and an inclined surface portion (114, 115) which has an inclination such that the width of said passageway increases in a direction towards the inside of said cassette body, the fabric members being attached to said flat surface portions and said inclined surface portions; **characterised in that** each inclined surface portion terminates in a step formed on both inner surfaces such that the width of the passageway is again constant; and
said cassette body further comprises steps (116) formed on the lateral walls of said film passageway (26,129,131) facing on the lateral edges of said film so as to widen said film passageway in the vicinity of said film passage mouth in order to shield light incident on gaps between said lateral walls and said fabric.

2. A photographic film cassette according to claim 1, including
guide means (22,24) for guiding said film leader to be close to a position defined between said first and second light trapping members when the film leader passes between said first and second light trapping members; wherein
the tips of the pile threads of each of said first and second light trapping members (28a,28b) project among the pile threads of the opposite light trapping member (28a,28b),
said guide means include a ridge (22,24) formed on an inner surface of said cassette body in order to prevent said film from loosening, and further including a ridge extended portion (22b) extending from said ridge (22) toward said film passage mouth along the upper surface of said film passageway,
the amount of projection of said ridge extended portion (22b,24b) being determined such that said film leader is advanced against said second fabric pile threads at a height greater than ¼ of a height of said second pile threads, said height of said second pile threads being determined with reference to bottoms thereof.

3. The photographic film cassette of claim 1 or 2, adapted to cause a film leader to advance to the outside of said film passage mouth through said film passageway (26,129,131) upon rotation of said spool.

## Patentansprüche

1. Fotofilmkassette (10, 128, 130, 132) mit:
einem Fotofilm (14), der auf eine Spule (83) aufgewickelt ist, die in einem Kassettengehäuse (56) enthalten ist, die aus zwei Hälften (28, 59) in lichtdichter Weise ausgebildet ist, wobei der Film nach außen durch ein Filmdurchtrittsmaul gefördert wird;
einem Filmdurchtritt (26, 129, 131), der im Kassettengehäuse ausgebildet ist, um den Film durch das Filmdurchtrittsmaul hindurchtreten zu lassen, wobei der Filmdurchtritt jeweils obere und untere Oberflächen aufweist;
erste und zweite Textilteile (28a, 28b, 100a) mit Florfäden (100b), die am Filmdurchtritt zum Abschirmen von Licht befestigt sind;
wobei die oberen und unteren Oberflächen des Filmdurchtritts jeweils einen flachen Oberflächenbereich aufweisen, so daß die Breite des Filmdurchtritts konstant ist, und einen geneigten Oberflächenbereich (114, 115) enthalten, der eine derartige Neigung aufweist, daß die Breite des Durchtritts sich in Richtung auf das Innere des Kassettengehäuses erhöht, wobei die Textilteile an den flachen Oberflächenbereichen und den abgeschrägten Oberflächenbereichen befestigt sind, **dadurch gekennzeichnet**, daß jeder abgeschrägte Oberflächenbereich in einer Stufe endet, die an beiden inneren Oberflächen derart ausgebildet sind, daß die Breite des Durchtritts wiederum konstant ist, und daß das Kassettengehäuse ferner Stufen (116) aufweist, die an den seitlichen Wänden des Filmdurchtritts (26, 129, 131) ausgebildet sind, die den seitlichen Kanten des Films zugewandt sind, so daß der Filmdurchtritt in der Nähe des Filmdurchtrittsmauls verbreitert wird, um an Spalten zwischen den Seitenwänden und dem Textilmaterial einfallendes Licht abzuschirmen.

2. Fotofilmkassette nach Anspruch 1, mit einer Führungseinrichtung (22, 24) zum Leiten des Filmanfangs an eine Position, die zwischen den ersten und zweiten lichtabschirmenden Teilen definiert ist, wenn der Filmanfang zwischen den ersten und zweiten lichtabschirmenden Teilen hindurchtritt, wobei
die Spitzen der Florfäden jedes der ersten und zweiten lichtabschirmenden Teile (28a, 28b) sich zwischen die Florfäden des gegenüberliegenden lichtabschirmenden Teils (28a, 28b) erstrecken,
wobei die Führungseinrichtung eine Rippe (22, 24) enthält, die an einer inneren Oberfläche des Kassettengehäuses ausgebildet ist, um zu verhindern, daß der Film locker wird, und ferner einen Rippenverlängerungsbereich (22b) enthält, der sich von der Rippe (22) in Richtung auf das Filmdurchtrittsmaul entlang der oberen Oberfläche des Filmdurchtritts erstreckt,
wobei die Größe der Erstreckung des Rippenverlängerungsbereiches (22b, 24b) so bestimmt ist, daß der Filmanfang gegen die Florfäden des zweiten Textilmaterials in einer Höhe gefördert wird, die größer als 1/4 einer Höhe der zweiten Florfäden ist, wobei die Höhe der zweiten Florfäden bestimmt wird bezüglich ihrer unteren Bereiche.

3. Die Fotofilmkassette der Ansprüche 1 oder 2, so ausgebildet, daß ein Filmanfang aus dem Filmdurchtrittsmaul durch den Filmdurchtritt (26, 129, 131) durch Drehen der Spule gefördert wird.

## Revendications

1. Cassette de film photographique (10, 128, 130, 132) comportant :
un film photographique (14) enroulé sur une bobine (83) contenue dans un corps de cassette (56), formé par deux moitiés (58, 59) d'une manière étanche à la lumière, ledit film étant avancé vers l'extérieur à travers une embouchure de passage de film;
un passage de film (26, 129, 131) formé dans ledit corps de cassette afin de laisser passer ledit film à travers ladite embouchure de passage de film, ledit passage de film ayant des surfaces intérieures supérieure et inférieure respectives; et
des premier et deuxième éléments en tissu (28a, 28b, 100a) ayant des fils de poil (100b), fixés sur ledit passage de film afin de piéger la lumière;
lesdites surfaces supérieure et inférieure dudit passage de film ayant chacune une partie de surface plate, de telle sorte qu'une largeur dudit passage de film est constante, et une partie de surface inclinée (114, 115) qui a une inclinaison telle que la largeur dudit passage augmente dans une direction vers l'intérieur dudit corps de cassette, les éléments en tissu étant fixés sur lesdites parties de surface plate et lesdites parties de surface inclinées; chaque partie de surface inclinée se terminant par un palier formé sur les deux surfaces internes de telle sorte que la largeur du passage est de nouveau constante; et
ledit corps de cassette comporte en outre des paliers (116) formés sur les parois latérales dudit passage de film (26, 129, 131) orientées vers les bords latéraux dudit film de façon à élargir ledit passage de film au voisinage de ladite embouchure de passage de film de façon à assurer une protection contre la lumière incidente sur des espaces entre lesdites parois latérales et ledit tissu.

2. Cassette de film photographique selon la revendication 1, comprenant
des moyens de guidage (22, 24) destinés à guider ladite amorce de film afin d'être proche d'une partie définie entre lesdits premier et deuxième éléments destinés à piéger la lumière lorsque l'amorce de film passe entre lesdits premier et deuxième éléments destinés à piéger la lumière;
les extrémités des fils de poil de chacun desdits premier et deuxième éléments destinés à piéger la lumière (28a, 28b) dépassant des fils de poil de l'élément destiné à piéger la lumière (28a, 28b) opposé,
lesdits moyens de guidage comprenant une nervure (22, 24) formée sur une surface interne dudit corps de cassette afin d'empêcher ledit film de se détendre, et comprenant en outre une partie d'extension de nervure (22b) s'étendant depuis ladite nervure (22) vers ladite embouchure de passage de film le long de la surface supérieure dudit passage de film;
la valeur de dépassement de ladite partie d'extension de nervure (22b, 24b) étant déterminée de telle sorte que ladite amorce de film est avancée contre lesdits deuxièmes fils de poil de tissu à une hauteur supérieure à 1/4 d'une hauteur desdits deuxièmes fils de poil, ladite hauteur desdits deuxièmes fils de poil étant déterminée par rapport au fond de ceux-ci.

3. Cassette de film photographique selon la revendication 1 ou 2, prévue pour amener une amorce de film à avancer vers l'extérieur de ladite embouchure de passage de film à travers ledit passage de film (26, 129, 131) lors de la rotation de ladite bobine.
